# FASCICULE DE BREVET EUROPEEN

(11) **EP 3 004 571 B1**
(45) Date de publication et mention de la délivrance du brevet: **06.10.2021**
(21) Numéro de dépôt: 14733363.7
(22) Date de dépôt: 04.06.2014
(51) Int. Cl.: F01K 23/02, F01K 23/04, F01K 17/06, F23G 7/00, F01K 7/00

(54) **PROCEDE DE PRODUCTION D'ENERGIE PAR COMBUSTION DE MATIERES, ET INSTALLATION POUR LA MISE EN OEUVRE DU PROCEDE**
VERFAHREN ZUR ENERGIEERZEUGUNG DURCH VERBRENNUNG VON STOFFEN SOWIE ANLAGE ZUR DURCHFÜHRUNG DES VERFAHRENS
METHOD FOR PRODUCING ENERGY BY BURNING MATERIALS, AND FACILITY FOR IMPLEMENTING THE METHOD

(30) Priorité: 05.06.2013 FR 1355165
(43) Date de publication de la demande: 13.04.2016
(73) Titulaire: SUEZ Groupe, 92040 Paris la Défense Cedex (FR)
(72) Inventeur: DUONG, Frédéric, F-66370 Pezilla-la-Riviere (FR)
(74) Mandataire: IPAZ
(86) Numéro de dépôt international: PCT/IB2014/061946
(87) Numéro de publication internationale: WO 2014/195882

(56) Documents cités:
- EP-A1- 2 236 803
- FR-A1- 2 979 138
- GB-A- 1 251 275

## Description

L'invention est relative à un procédé de production d'énergie par combustion de matières combustibles, dégageant des fumées, procédé selon lequel une partie de la chaleur des fumées est récupérée par échange de chaleur avec un fluide thermique circulant dans une boucle comportant un évaporateur constituant la source chaude d'une unité de valorisation énergétique à cycle de Rankine à fluide organique (ORC), tandis que la source froide, formant condenseur, du cycle de Rankine est alimentée par un fluide de refroidissement qui récupère de la chaleur de condensation du fluide organique.

Un procédé de ce genre est connu, notamment d'après FR 2 979 138.

EP 2 236 803 A1 décrit un autre procédé du même genre pour récupérer de la chaleur résiduelle d'un moteur à combustion interne.

Généralement, le condenseur du cycle de Rankine est un hydrocondenseur utilisant comme fluide de refroidissement un circuit d'eau tempérée, notamment d'eau glycolée. La chaleur récupérée au niveau de ce condenseur, dans la plupart des cas, est dissipée dans l'air ambiant par des aéroréfrigérants. La quantité de chaleur de condensation est ainsi habituellement perdue.

Dans une unité de valorisation énergétique à cycle de Rankine à fluide organique, avec turbine, la quantité de chaleur disponible au niveau du condenseur représente environ 70 % à 80 % de l'énergie qui entre dans le système constitué par cette unité de valorisation.

L'invention a pour but, surtout, d'améliorer la valorisation de l'énergie thermique, et en particulier d'utiliser une partie de la chaleur de condensation du cycle de Rankine pour augmenter le taux de conversion électrique de la chaleur récupérée et disponible.

Selon l'invention, un procédé du genre défini précédemment est caractérisé en ce qu'une partie au moins du fluide de refroidissement du condenseur du cycle de Rankine circule en circuit fermé et transmet de la chaleur à de l'air pour la combustion des matières, et/ou à de l'eau d'alimentation en aval d'une chaudière produisant de la vapeur.

La chaleur récupérée est ainsi utilisée en interne dans une installation de production d'énergie, en particulier dans une installation de valorisation énergétique de déchets. Cette utilisation contribue à l'augmentation significative du rendement de conversion électrique de l'énergie thermique récupérée.

Les fumées peuvent être soumises, avant échange avec le fluide thermique, à un refroidissement par un autre fluide, notamment par de l'eau d'alimentation d'une chaudière, pour que la température des fumées à l'entrée de l'échange avec le fluide thermique soit comprise entre 120°C et 300°C.

Avantageusement, le procédé comporte un cycle thermodynamique eau-vapeur avec chaudière produisant de la vapeur d'eau, en particulier pour entraîner une turbine ; le procédé combine et associe dans une même installation de valorisation énergétique de déchets ou de biomasse, le cycle eau-vapeur et le cycle de Rankine à fluide organique. Le procédé utilise la chaleur additionnelle récupérée sur les fumées en sortie d'économiseur de la chaudière, pour alimenter en chaleur le cycle de Rankine à fluide organique, puis utilise en boucle la chaleur dissipée au niveau du condenseur du cycle de Rankine pour préchauffer l'air de combustion et/ou l'eau alimentaire du cycle eau-vapeur, ce qui a pour effet d'augmenter la quantité de chaleur entrante dans le cycle thermique eau-vapeur.

Une partie de la chaleur qui alimente le cycle thermodynamique de Rankine à fluide organique peut être convertie en électricité, et l'apport de chaleur en provenance de la condensation du cycle de Rankine est introduit dans le cycle eau-vapeur avec pour effet de réduire la consommation de vapeur soutirée dans le cycle eau-vapeur pour alimenter les auxiliaires et d'augmenter ainsi la production électrique du turbo alternateur.

L'invention est également relative à une installation thermique de production d'énergie par combustion de matières dégageant des fumées, pour la mise en oeuvre du procédé défini précédemment, cette installation comprenant un échangeur de chaleur entre les fumées et un fluide thermique circulant dans une boucle comportant un évaporateur constituant la source chaude d'une unité de valorisation énergétique à cycle de Rankine à fluide organique, dont la source froide, constituée par un condenseur, est alimentée par un fluide de refroidissement qui récupère de la chaleur de condensation, cette installation étant caractérisée en ce qu'elle comporte un circuit fermé dans lequel circule le fluide de refroidissement du condenseur du cycle de Rankine, ce circuit fermé comportant un échangeur de chaleur pour assurer un préchauffage d'air pour la combustion des matières, et/ou d'eau d'alimentation d'une chaudière.

Avantageusement, l'installation comporte un équipement de valorisation énergétique à cycle eau-vapeur, et est caractérisée en ce que l'équipement à cycle eau-vapeur est couplé avec l'unité de valorisation énergétique à cycle de Rankine à fluide organique, et en ce que l'échangeur de chaleur introduit un apport de chaleur, provenant de la source froide du cycle de Rankine, dans le cycle eau-vapeur.

L'installation peut comporter une pompe à chaleur disposée entre le départ et le retour du circuit de refroidissement du condenseur du cycle de Rankine, la pompe à chaleur étant prévue pour faire monter la température de départ du condenseur et abaisser la température de retour au condenseur.

L'installation peut comporter, dans l'unité de valorisation énergétique à cycle de Rankine à fluide organique, un récupérateur de chaleur supplémentaire installé sur la conduite de vapeur sous vide en sortie d'une turbine, en amont du condenseur, le liquide organique étant réchauffé dans le récupérateur par la vapeur basse pression sortant de la turbine avant d'entrer dans l'évaporateur.

Cette utilisation en cascade de la chaleur permet quasiment de doubler la production électrique du cycle de Rankine seul pour atteindre un taux de conversion électrique de la chaleur additionnelle récupérée proche de 30 %.

L'invention consiste, mises à part les dispositions exposées cidessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est un schéma simplifié d'une installation thermique de production d'énergie mettant en oeuvre le procédé de l'invention,
Fig.2 est un schéma partiel de l'installation illustrant une variante de réalisation de l'unité à cycle de Rankine, et
Fig.3 est un schéma d'une autre variante de l'installation avec pompe à chaleur.

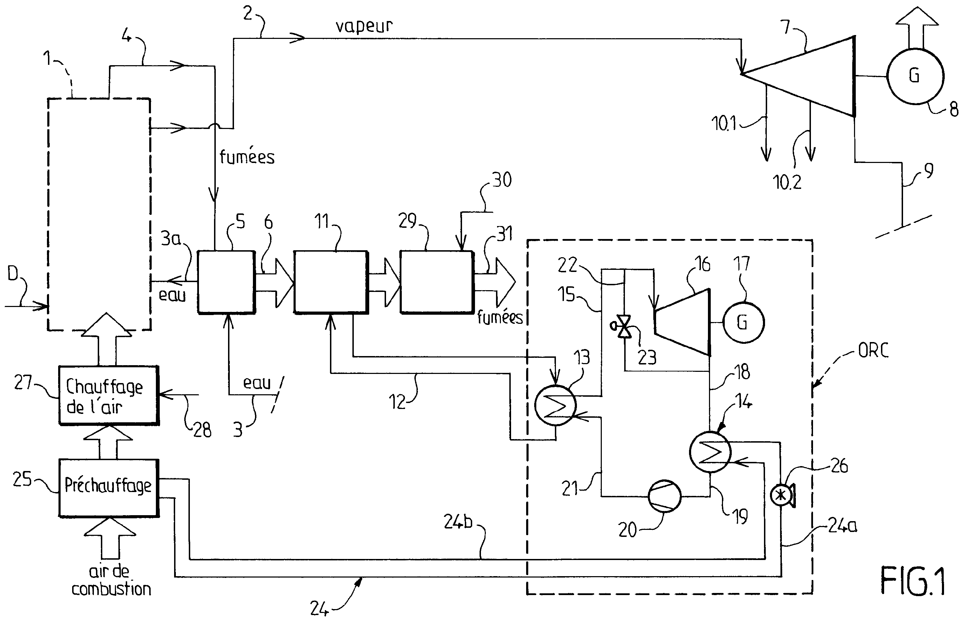

En se reportant à Fig.1 des dessins, on peut voir le schéma d'une installation thermique de production d'énergie par combustion de matières. Dans le cas considéré, il s'agit d'une installation de valorisation énergétique de déchets, notamment de déchets ménagers ou assimilés.

L'installation comporte au moins une chaudière 1 dans laquelle sont introduites les matières D pour y être brûlées et produire de la vapeur d'eau à pression relativement élevée, notamment de l'ordre de 40 à 60 bars, délivrée par une conduite 2. La chaudière 1 est alimentée en eau par une conduite 3a. La combustion des matières dégage des fumées (ou gaz de combustion) qui sont recueillies par une conduite 4 et dirigées vers un échangeur de chaleur 5 qui assure un réchauffage par les fumées de l'eau arrivant par la conduite 3 pour l'alimentation de la chaudière. L'échangeur 5, dit économiseur, est prévu pour que les fumées qui en sortent par une conduite 6 se trouvent à une température relativement basse, notamment comprise entre 120°C et 300°C, alors que les fumées arrivant par la conduite 4 se trouvent à une température généralement supérieure à 500°C.

La vapeur, dirigée par la conduite 2, est injectée à l'entrée haute pression d'une turbine 7 qui entraîne un générateur électrique 8, notamment un alternateur. La vapeur d'eau détendue basse pression sort de la turbine par une conduite 9 et est dirigée vers un équipement de condensation (non représenté), notamment refroidi par de l'air (aérocondenseur) ou de l'eau (hydrocondenseur). L'eau condensée peut être préchauffée par un soutirage basse pression 10.2 sur la turbine et subir différents traitements, notamment de dégazage, pour retourner par la conduite 3 à l'alimentation de la chaudière. Un cycle thermodynamique eau-vapeur est ainsi effectué entre la source chaude constituée par la chaudière 1 et la source froide constituée par l'équipement de condensation (non représenté) de la vapeur d'eau sortant par la conduite 9.

Ce cycle thermodynamique eau-vapeur est combiné et associé, dans une même installation de valorisation énergétique de déchets ou de biomasse, avec un cycle thermodynamique de Rankine à fluide organique ORC. La chaleur additionnelle récupérée sur les fumées en sortie de chaudière est utilisée pour alimenter en chaleur le cycle de Rankine ORC.

A cet effet, un échangeur de chaleur 11 est disposé en aval de l'échangeur 5 et est traversé par les fumées refroidies sortant de l'échangeur 5, pour récupérer une partie de leur chaleur.

Les fumées cèdent de la chaleur, dans l'échangeur 11, à un fluide thermique, notamment de l'huile ou de l'eau surchauffée, circulant dans une boucle fermée 12 qui comporte un évaporateur 13 constituant la source chaude de l'unité de valorisation énergétique à cycle de Rankine ORC. Le sens de circulation du fluide thermique dans la boucle 12 est indiqué par des flèches sur Fig. 1. La température du fluide thermique à la sortie de l'évaporateur 13 est inférieure à celle de l'entrée. A titre d'exemple non limitatif, la chute de température du fluide thermique dans l'évaporateur 13 peut être de l'ordre de 50°C, la température en sortie de l'échangeur 13 étant de l'ordre de 150°C. Le fluide thermique est réchauffé dans l'échangeur 11 avant de retourner à l'entrée de l'évaporateur 13.

L'unité à cycle de Rankine comporte un circuit fermé dans lequel circule un fluide organique, notamment un siloxane ou un hydrocarbure. La source chaude est formée par l'évaporateur 13 et la source froide est constituée par un condenseur 14. Le fluide organique passe de l'état liquide à l'état vapeur dans l'évaporateur 13 et est dirigé par une conduite 15 à l'entrée haute pression d'une turbine 16 qui entraîne un générateur électrique 17.

La vapeur de fluide organique détendue, à plus basse pression, sort de la turbine 16 par une conduite 18 qui dirige la vapeur vers le condenseur 14. Le fluide organique sort du condenseur 14 à l'état liquide par une conduite 19 reliée à l'admission d'une pompe 20. Le liquide organique, dont la pression est augmentée par la pompe 20, sort par une conduite 21 reliée à l'entrée de l'évaporateur 13.

Une dérivation 22, ou by-pass, munie d'une vanne 23 de réglage de débit, est prévue pour assurer un contournement de la turbine 16 entre l'entrée et la sortie. Cette dérivation 22 permet de mettre hors circuit partiellement ou totalement la turbine 16, selon les circonstances.

Le fluide de refroidissement du condenseur 14, généralement constitué par de l'eau, circule dans un circuit fermé 24 et transmet de la chaleur à l'air de combustion des matières comme illustré sur Fig. 1. La transmission de chaleur entre le fluide de refroidissement et l'air de combustion est assurée par un échangeur de chaleur 25 installé dans le circuit 24. Le fluide de refroidissement est mis en mouvement dans le circuit 24 par une pompe 26, suivant le sens indiqué par la flèche sur Fig. 1.

En variante, le fluide de refroidissement du circuit 24 pourrait servir à préchauffer l'eau d'alimentation de la chaudière 1, auquel cas un échangeur de chaleur serait prévu entre l'eau d'alimentation de la conduite 3 et le fluide circulant dans le circuit 24. Le préchauffage de l'eau d'alimentation de la chaudière pourrait être effectué en plus de celui de l'air de combustion.

Selon l'exemple illustré sur Fig. 1, l'air de combustion préchauffé sortant de l'échangeur 25 traverse un second échangeur de chaleur 27, situé en aval, pour être porté à une température plus élevée par de la vapeur d'eau arrivant par une conduite 28 et prélevée sur un étage intermédiaire 10.1 de la turbine 7. L'air sortant de l'échangeur 27 constitue l'air de combustion pour les matières de la chaudière 1.

Dans le cas particulier d'un combustible à bas PCI (Pouvoir Calorifique Inférieur) constitué par des déchets et/ou des boues, l'air de combustion est réchauffé pour atteindre une température en sortie de l'échangeur 27 généralement comprise entre 100 et 200°C. La vapeur d'eau soutirée en 10.1 sur la turbine 7 se trouve à une pression qui peut varier entre 7 et 12 bars. Il est à noter que chaque tonne de vapeur soutirée sur la turbine à ce niveau de pression intermédiaire réduit d'environ 50 % la production d'électricité relative au débit de vapeur soutirée.

L'eau alimentaire de la chaudière 1 traverse un préchauffeur d'eau (non représenté) et un dégazeur thermique (non représenté) ; elle est portée à une température qui peut être comprise entre 110 et 140°C. L'eau alimentaire est constituée principalement par les condensats de vapeur d'eau recyclés. Un apport d'eau complémentaire est prévu pour compenser les pertes. Le préchauffage de l'eau est également assuré par un soutirage sur la turbine, notamment le soutirage 10.2, à une pression qui varie généralement entre 3 et 4 bars, selon le niveau de température de réchauffage.

Le procédé de l'invention d'une part utilise la chaleur additionnelle récupérée au niveau de l'échangeur 11 sur les gaz de combustion du cycle eau-vapeur pour alimenter en chaleur le cycle de Rankine, et d'autre part utilise en cascade la chaleur dissipée au niveau de la source froide formée par le condenseur 14 du cycle de Rankine, pour réchauffer l'air de combustion dans l'échangeur 25, et/ou l'eau alimentaire de la chaudière 1 du cycle eau-vapeur.

Une partie de la chaleur qui alimente le cycle de Rankine est convertie en électricité par la turbine 16. L'apport de chaleur provenant de la condensation dans le condenseur 14 est introduit dans le cycle eau-vapeur par le circuit 24 et l'échangeur 25. Cet apport de chaleur a pour effet de réduire la consommation de vapeur soutirée sur la turbine 7 pour le réchauffage de l'air de combustion, ou de l'eau alimentaire, et permet par conséquent d'augmenter la production électrique du turbo alternateur.

Cette utilisation en cascade de la chaleur permet quasiment de doubler la production électrique du cycle organique de Rankine seul pour atteindre un taux de conversion électrique global de la chaleur récupérée au niveau de l'échangeur 11 proche de 30 %.

Le fluide thermique de la boucle 12 peut être de l'huile ou de l'eau surchauffée qui alimente le cycle organique de Rankine à un niveau de température compatible avec le fluide organique utilisé dans ce cycle de Rankine ORC, généralement dans une plage de température de 150°C à 250°C.

Le système de refroidissement constitué par le circuit 24 du condenseur 14 du cycle de Rankine est généralement un système à eau et peut être relié à plusieurs échangeurs de chaleur placés sur le circuit de réchauffage d'air de combustion comme illustré par l'échangeur 25, ou de préchauffage des condensats de vapeur d'eau du cycle eau-vapeur situés en amont d'une bâche d'eau alimentaire pour la chaudière 1.

Quelques valeurs numériques sont données ci-après pour préciser les différents niveaux de température ; ces valeurs sont fournies à titre indicatif et n'ont aucun caractère limitatif.

Selon un exemple, la vapeur d'eau sortant de la chaudière par la conduite 2 se trouve à une pression d'environ 40 bars, à une température d'environ 400°C et est admise dans ces conditions de température de pression dans l'étage haute pression de la turbine 7. Le premier soutirage 10.1 sur la turbine 7 est effectué à pression moyenne pour délivrer de la vapeur à une température d'environ 175°C sous une pression d'environ 5 bars. Toutes les pressions de vapeur indiquées sont des pressions absolues. Le soutirage basse pression 10.2 délivre de la vapeur à pression d'environ 1,6 bar à une température d'environ 112°C. La vapeur sort de la turbine 7 par la conduite 9 à une pression d'environ 0,15 bar, à une température de 54°C.

Les fumées sortant de l'échangeur 5 par la conduite 6 sont à une température d'environ 220°C et, en sortie de l'échangeur 11, à une température d'environ 175°C. Les fumées peuvent ensuite traverser une unité 29 d'épuration des fumées avec injection de vapeur d'eau par une conduite 30. En sortie 31 de l'unité 29, les fumées sont à une température d'environ 140°C.

Le fluide thermique de la boucle 12 réchauffé dans l'échangeur 11 se trouve à une température d'environ 200°C à son entrée dans l'évaporateur 13 et à une température d'environ 150°C en sortie de l'évaporateur.

Le fluide organique dans le cycle de Rankine est sous forme vapeur en sortant de l'évaporateur 13 et arrive à une température d'environ 190°C à l'entrée de la turbine 16 pour en sortir à une température d'environ 120°C par la conduite 18. Le fluide organique condensé sortant par la conduite 19 se trouve à une température d'environ 115°C à l'entrée de la pompe 20.

L'eau de refroidissement du circuit 24 sort du condenseur 14 à une température proche de 100°C pour revenir à l'entrée de ce condenseur 14 à une température d'environ 80°C.

L'air de combustion, qui entre dans l'échangeur 25 à la température ambiante d'environ 10°C à 20°C, est préchauffé jusqu'à 80-85°C dans l'échangeur 25 par la chaleur extraite du condenseur 14 et véhiculée par l'eau du circuit 24.

Le fonctionnement du cycle eau-vapeur et celui du cycle organique de Rankine sont rappelés brièvement ci-après.

Pour le cycle eau-vapeur, l'énergie thermique produite par la combustion de matières dans la chaudière 1 permet d'obtenir dans la conduite 2 de la vapeur d'eau sous pression qui assure l'entraînement de la turbine 7 et la production d'énergie électrique par le générateur 8. La vapeur basse pression sortant par la conduite 9 est condensée. L'eau ainsi formée est retournée, par la conduite 3, à la chaudière pour être préchauffée dans l'échangeur 5 par les fumées.

Pour le cycle organique de Rankine, la chaleur additionnelle du cycle eau-vapeur récupérée par le fluide thermique de la boucle 12 sert à la vaporisation du fluide organique dans l'évaporateur 13. Les vapeurs sous pression de fluide organique, injectées à l'entrée de turbine 16, assurent une production d'énergie électrique.

La chaleur de condensation des vapeurs organiques récupérée par l'eau de refroidissement du circuit 24 est réinjectée dans le cycle thermique eau-vapeur par préchauffage de l'air de combustion dans l'échangeur 25 et/ou de l'eau alimentaire de la chaudière. Cette combinaison des deux cycles thermodynamiques contribue à une amélioration significative du rendement de conversion en énergie électrique de la chaleur récupérée.

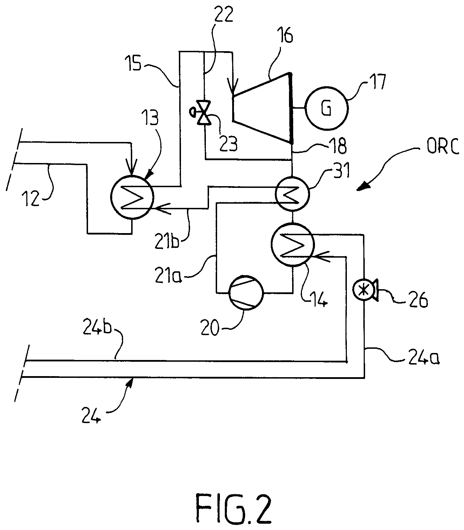

Fig. 2 illustre partiellement une variante de réalisation de l'installation concernant l'unité à cycle de Rankine. La partie de l'installation non représentée sur Fig.2 est identique à celle illustrée sur Fig.1 et ne sera pas décrite à nouveau. Selon Fig.2, la conduite 21a en sortie de la pompe 20 est reliée à l'entrée d'un récupérateur 31 de chaleur installé sur la conduite 18 de sortie de la turbine 16, en amont du condenseur 14. Le liquide organique sous pression circulant dans la conduite 21a est réchauffé dans le récupérateur 31 par la vapeur basse pression sortant de la turbine 16. Le liquide réchauffé sort du récupérateur 31 par la conduite 21b pour entrer dans l'évaporateur 13.

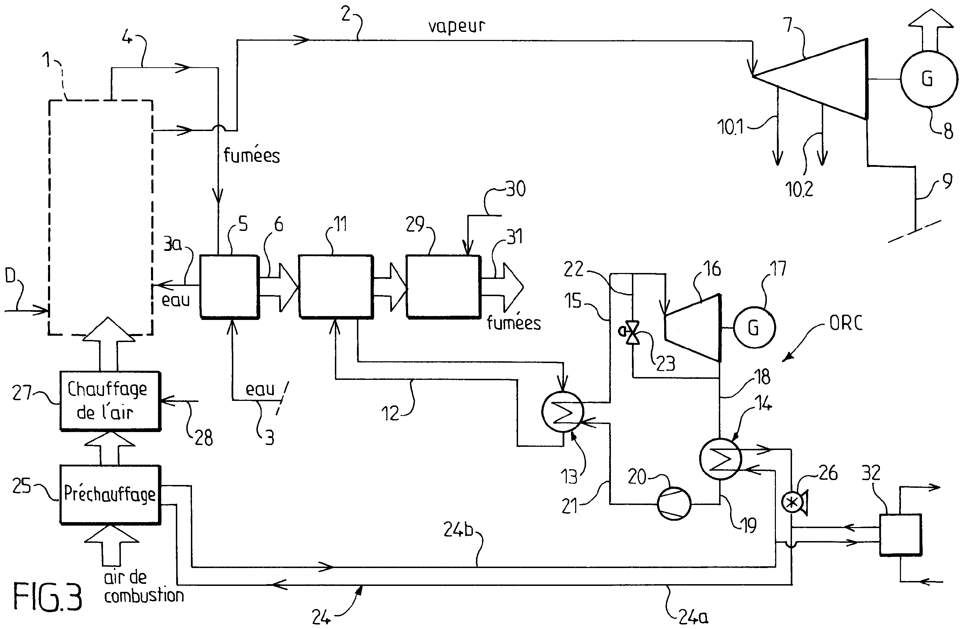

Fig. 3 illustre une autre variante de réalisation selon laquelle une pompe à chaleur 32 est installée entre la branche de départ 24a du circuit de refroidissement 24 du condenseur 14 et la branche de retour 24b de ce circuit. La pompe à chaleur 32 permet de faire monter la température de la branche de départ 24a et, dans le même temps, d'abaisser la température dans la branche de retour 24b, qui correspond à la température de la source froide. Ceci a pour effet d'augmenter le rendement du cycle organique de Rankine et la production électrique et de pouvoir mieux utiliser la chaleur récupérée sur le condenseur 14. La chaleur extraite par la pompe 32 peut être utilisée pour le chauffage de bâtiments.

L'invention présente de nombreux avantages dont ceux évoqués ci-après.

Par rapport à un cycle organique de Rankine classique équipé d'un système de condensation et de refroidissement autonome, ou en comparaison d'un économiseur supplémentaire qui assure le préchauffage des condensats en amont d'une bâche d'eau alimentaire, pour une même quantité de chaleur additionnelle récupérée au niveau des fumées de combustion, la production électrique supplémentaire est nettement augmentée, pratiquement doublée.

Pour des unités qui ont un rendement thermique et thermodynamique relativement faible, notamment inférieur à 20%, l'amélioration de rendement sera importante et devrait permettre d'atteindre un indice WFD R1 (Waste Frame Directive) de 0,6 qui dispenserait de payer une taxe (TGPA) sur le tonnage de déchets incinérés.

Un avantage indirect de l'utilisation de la chaleur au condenseur du cycle organique de Rankine est la réduction de la consommation d'électricité d'aéroréfrigérants dont la consommation électrique peut être évaluée à environ 5 à 7 % de la production électrique du cycle de Rankine.

L'impact énergétique, économique et environnemental de l'utilisation de la chaleur additionnelle, qui peut être récupérée sur de nombreuses unités de valorisation énergétique des déchets, pourra être significatif.

Les applications de l'invention sont nombreuses et concernent notamment :
- les unités de valorisation énergétique des déchets ou de biomasse (bois, boues, matières organiques), équipées de chaudières de récupération de chaleur ;
- les unités d'incinération des boues de stations d'épuration, équipées de réchauffeurs d'air ;
- tous équipements thermiques qui dissipent de la chaleur à moyenne température et qui nécessitent simultanément de la chaleur pour le réchauffage de l'air de combustion du combustible, notamment les fours de verrerie.

## Revendications

1. Procédé de production d'énergie par combustion de matières combustibles, dégageant des fumées, selon lequel une partie de la chaleur des fumées est récupérée par échange de chaleur avec un fluide thermique circulant dans une boucle (12) qui comporte un évaporateur (13) constituant la source chaude d'une unité de valorisation énergétique à cycle de Rankine à fluide organique, tandis que la source froide, formant condenseur (14), du cycle de Rankine est alimentée par un fluide de refroidissement qui récupère de la chaleur de condensation du fluide organique, une partie au moins du fluide de refroidissement du condenseur (14) du cycle de Rankine circulant en circuit fermé (24) et **caractérisé en ce que** ladite partie transmet de la chaleur à de l'air pour la combustion des matières et/ou à de l'eau d'alimentation en aval d'une chaudière produisant de la vapeur.

2. Procédé selon la revendication 1, **caractérisé en ce que** les fumées sont soumises, avant échange avec le fluide thermique, à un refroidissement (5) par un autre fluide, notamment par de l'eau d'alimentation d'une chaudière, la température des fumées à l'entrée de l'échange avec le fluide thermique étant comprise entre 120°C et 300°C.

3. Procédé selon la revendication 1 ou 2, comportant un cycle thermodynamique eau-vapeur avec chaudière produisant de la vapeur d'eau, en particulier pour entraîner une turbine, **caractérisé en ce que** le procédé combine et associe dans une même installation de valorisation énergétique des déchets ou de biomasse, le cycle eau-vapeur et le cycle de Rankine à fluide organique, en utilisant la chaleur additionnelle récupérée sur les fumées du cycle eau-vapeur pour alimenter en chaleur le cycle de Rankine à fluide organique, puis en utilisant en cascade la chaleur dissipée au niveau du condenseur (14) du cycle de Rankine pour préchauffer l'air de combustion ou l'eau alimentaire du cycle eau-vapeur.

4. Procédé selon la revendication 3, **caractérisé en ce qu'**une partie de la chaleur qui alimente le cycle de Rankine à fluide organique est convertie en électricité, et **en ce que** l'apport de chaleur en provenance de la condensation du cycle de Rankine est introduit dans le cycle eau-vapeur qui a comme effet de réduire la consommation de vapeur soutirée dans le cycle eau-vapeur pour le préchauffage de l'air de combustion.

5. Installation thermique de production d'énergie par combustion de matières, dégageant des fumées, pour la mise en oeuvre du procédé selon la revendication 1, comprenant un échangeur de chaleur (11) entre les fumées et un fluide thermique circulant dans une boucle (12) comportant un évaporateur (13) constituant la source chaude d'une unité de valorisation énergétique à cycle organique de Rankine, dont la source froide, constituée par un condenseur (14), est alimentée par un fluide de refroidissement qui récupère de la chaleur de condensation, l'installation comportant un circuit fermé (24) dans lequel circule le fluide de refroidissement du condenseur (14) du cycle de Rankine, **caractérisée en ce que** ce circuit comporte un échangeur de chaleur (25) pour assurer un préchauffage d'air pour la combustion des matières ou d'eau d'alimentation d'une chaudière.

6. Installation selon la revendication 5, comportant un équipement de valorisation énergétique à cycle eau-vapeur, **caractérisée en ce que** l'équipement à cycle eau-vapeur est couplé avec l'unité de valorisation énergétique à cycle de Rankine à fluide organique, et **en ce que** l'échangeur de chaleur (25) du circuit fermé (24) introduit un apport de chaleur, provenant du cycle de Rankine, dans le cycle eau-vapeur.

7. Installation selon la revendication 5 ou 6, **caractérisée en ce qu'**elle comporte une pompe à chaleur (32) disposée entre le départ et le retour du circuit (24) de refroidissement du condenseur (14) du cycle de Rankine, la pompe à chaleur étant prévue pour faire monter la température de départ du condenseur (14) et abaisser la température de retour au condenseur.

8. Installation selon l'une quelconque des revendications 5 à 7, **caractérisée en ce qu'**elle comporte, dans l'unité de valorisation énergétique à cycle de Rankine à fluide organique, un récupérateur (31) de chaleur supplémentaire installé sur une conduite (18) de vapeur sous vide en sortie d'une turbine (16), en amont du condenseur (14), le liquide organique étant réchauffé dans le récupérateur (31) par la vapeur basse pression sortant de la turbine (16) avant d'entrer dans l'évaporateur (13).

## Patentansprüche

1. Verfahren zur Energieerzeugung durch Verbrennung von brennbaren Stoffen, die Rauchgase freisetzen, bei dem ein Teil der Wärme der Rauchgase durch Wärmeaustausch mit einem thermischen Fluid wiedergewonnen wird, das in einem Kreislauf (12) zirkuliert, der einen Verdampfer (13) aufweist, der die Wärmequelle einer Energieverwertungseinheit mit organischem Rankine-Zyklus bildet, während die Kältequelle, die den Kondensator (14) bildet, des Rankine-Zyklus durch ein Kühlfluid gespeist wird, das Kondensationswärme des organischen Fluids zurückgewinnt, wobei wenigstens ein Teil des Kühlfluids des Kondensators (14) des Rankine-Zyklus in geschlossenem Kreislauf (24) zirkuliert, und
**dadurch gekennzeichnet, dass**
der Teil Wärme an Luft für die Verbrennung der Stoffe und/oder an Speisewasser abströmseitig eines Dampf erzeugenden Kessels überträgt.

2. Verfahren nach Anspruch 1,
**dadurch gekennzeichnet, dass**
die Rauchgase, vor Austausch mit dem thermischen Fluid, einer Kühlung (5) durch ein anderes Fluid, insbesondere durch Speisewasser eines Kessels, unterzogen werden, wobei die Temperatur der Rauchgase am Eingang des Austauschs mit dem thermischen Fluid zwischen 120 °C und 300 °C beträgt.

3. Verfahren nach Anspruch 1 oder 2, aufweisend einen thermodynamischen Wasser-Dampf Zyklus mit Wasserdampf erzeugendem Kessel, um insbesondere eine Turbine anzutreiben,
**dadurch gekennzeichnet, dass**
das Verfahren in einer selben Anlage zur Verwertung von Abfällen oder von Biomasse den Wasser-Dampf-Zyklus und den organischen Rankine-Zyklus kombiniert und verbindet, indem die zusätzliche aus den Rauchgasen zurückgewonnene Wärme des Wasser-Dampf-Zyklus verwendet wird, um den organischen Rankine-Zyklus mit Wärme zu speisen und indem anschließend die im Bereich des Kondensators (14) des Rankine-Zyklus abgegebene Wärme kaskadierend verwendet wird, um die Verbrennungsluft oder das Speisewasser des Wasser-Dampf-Zyklus aufzuheizen.

4. Verfahren nach Anspruch 3,
**dadurch gekennzeichnet, dass**
ein Teil der Wärme, die den organischen Rankine-Zyklus speist, in Elektrizität umgewandelt wird und dass die Zufuhr von aus der Kondensation des Rankine-Zyklus stammender Wärme in den Wasser-Dampf-Zyklus eingebracht wird, was bewirkt, dass sich der Verbrauch an Dampf, der zum Aufheizen der Verbrennungsluft in dem Wasser-Dampf-Zyklus abgezogen wird, reduziert.

5. Thermische Anlage zur Energieerzeugung durch Verbrennung von Rauchgase freisetzenden Stoffen für die Durchführung des Verfahrens nach Anspruch 1, umfassend einen Austauscher von Wärme (11) zwischen den Rauchgasen und einem thermischen Fluid, das in einem Kreislauf (12) zirkuliert, der einen Verdampfer (13) aufweist, der die Wärmequelle einer Energieverwertungseinheit mit organischem Rankine-Zyklus bildet, dessen Kältequelle, die von einem Kondensator (14) gebildet ist, durch ein Kühlfluid gespeist wird, das Kondensationswärme zurückgewinnt, wobei die Anlage einen geschlossenen Kreislauf (24) aufweist, in dem das Kühlfluid des Kondensators (14) des Rankine-Zyklus zirkuliert,
**dadurch gekennzeichnet, dass**
dieser Kreislauf einen Wärmeaustauscher (25) aufweist, um ein Aufheizen von Luft für die Verbrennung der Stoffe oder von Speisewasser eines Kessels sicherzustellen.

6. Anlage nach Anspruch 5, aufweisend eine Ausrüstung zur Energieverwertung mit Wasser-Dampf-Zyklus,
**dadurch gekennzeichnet, dass**
die Ausrüstung mit Wasser-Dampf-Zyklus mit der Energieverwertungseinheit mit organischem Rankine-Zyklus gekoppelt ist
und dass
der Wärmetauscher (25) des geschlossenen Kreislaufs (24) eine Zufuhr von aus dem Rankine-Zyklus stammenden Wärme in den Wasser-Dampf-Zyklus einbringt.

7. Anlage nach Anspruch 5 oder 6,
**dadurch gekennzeichnet, dass**
sie eine Wärmepumpe (32) aufweist, die zwischen dem Vorlauf und dem Rücklauf des Kühlkreislaufs (24) des Kondensators (14) des Rankine-Zyklus angeordnet ist, wobei die Wärmepumpe vorgesehen ist, um die Vorlauftemperatur vom Kondensator (14) zu erhöhen und die Rücklauftemperatur zum Kondensator zu senken.

8. Anlage nach einem der Ansprüche 5 bis 7,
**dadurch gekennzeichnet, dass**
sie, in der Energieverwertungseinheit mit organischem Rankine-Zyklus, eine zusätzliche Einheit zur Rückgewinnung (31) von Wärme aufweist, die auf einer Vakuumdampfleitung (18) am Ausgang einer Turbine (16), anströmseitig des Kondensators (14), installiert ist, wobei die organische Flüssigkeit in der Einheit zur Rückgewinnung (31) durch den aus der Turbine (16) austretenden Niederdruckdampf vor dem Eintreten in den Verdampfer (13) aufgeheizt wird.

## Claims

1. A method for the production of energy by combustion of combustible materials, releasing flue gases, according to which part of the heat of the flue gases is recovered by heat exchange with a thermal fluid circulating in a loop (12) which comprises an evaporator (13) constituting the hot source of an organic fluid Rankine cycle energy recovery unit, while the cold source, forming a condenser (14) of the Rankine cycle is supplied by a cooling fluid which recovers the heat of condensation of the fluid organic, at least part of the cooling fluid of the condenser (14) of the Rankine cycle circulating in a closed circuit (24) and **characterized in that** said at least part transmits heat to air for the combustion of materials and / or to feed water downstream of a steam producing boiler.

2. A method according to Claim 1, **characterized in that** the flue gases are subjected, before exchange with the thermal fluid, to cooling (5) by another fluid, in particular by the feed water of a boiler, the temperature of the flue gases at the entry of the exchange with the thermal fluid being between 120° C and 300° C.

3. A method according to Claim 1 or 2, comprising a thermodynamic water-steam cycle with boiler producing water vapor, in particular to drive a turbine, **characterized in that** the process combines and packages the water-steam cycle and the organic fluid Rankine cycle in a single installation for energy recovery from waste or biomass, using the additional heat recovered from the flue gases from the water-steam cycle to supply by heating the organic fluid Rankine cycle, then by cascading the heat dissipated at the level of the condenser (14) of the Rankine cycle to preheat the combustion air or the feed water of the water-steam cycle.

4. A method according to Claim 3, **characterized in that** part of the heat which feeds the organic fluid Rankine cycle is converted into electricity, and **in that** the heat input from the condensation (14) of the Rankine cycle is introduced in the water-steam cycle with the effect of reducing the consumption of steam withdrawn in the water-steam cycle for preheating the combustion air.

5. Thermal installation for the production of energy by combustion of materials, releasing flue gases, for the implementation of the method according to Claim 1, comprising a heat exchanger (11) between the flue gases and a thermal fluid circulating in a loop (12) comprising an evaporator (13) constituting the hot source of an organic Rankine cycle energy recovery unit, the cold source of which, consisting of a condenser (14), is supplied with a cooling fluid which recovers of the heat of condensation, the installation comprising a closed circuit (24) in which circulates the coolant of the condenser (14) of the Rankine cycle, **characterized in that** the circuit comprises a heat exchanger (25) to ensure preheating air for combustion of materials or feed water to a boiler.

6. Installation according to Claim 5, comprising a water-steam cycle energy recovery equipment, **characterized in that** the water-vapor cycle equipment is coupled with the organic fluid Rankine cycle energy recovery unit, and **in that** the heat exchanger (25) of the closed circuit (24) introduces a heat input, coming from the Rankine cycle, into the water-steam cycle.

7. Installation according to Claim 5 or 6, **characterized in that** it comprises a heat pump (32) arranged between the outlet and the return of the circuit (24) for cooling the condenser (14) of the Rankine cycle, the heat pump being designed to raise the leaving temperature of the condenser (14) and lower the return temperature to the condenser.

8. Installation according to any one of claims 5 to 7, **characterized in that** it comprises, in the organic fluid Rankine cycle energy recovery unit, an additional heat recuperator (31) installed on the pipe (18) vacuum steam at the outlet of a turbine (16), upstream of the condenser (14), the organic liquid being heated in the recuperator (31) by the low pressure steam leaving the turbine (16) before entering the evaporator (13).
